# EUROPEAN PATENT SPECIFICATION

(11) **EP 4 155 124 B1**
(45) Date of publication and mention of the grant of the patent: **06.03.2024**
(21) Application number: 22198150.9
(22) Date of filing: 27.09.2022
(51) Int. Cl.: B60P 1/36, B60P 1/38

(54) **TRANSPORT SPACE HAVING A MOVABLE PRODUCT DISCHARGING FLOOR**
TRANSPORTRAUM MIT EINEM BEWEGLICHEN PRODUKTENTLADUNGSBODEN
ESPACE DE TRANSPORT AVEC UN PLANCHER MOBILE POUR DÉCHARGER DES PRODUITS

(30) Priority: 27.09.2021 NL 2029256
(43) Date of publication of application: 29.03.2023
(73) Proprietor: EPM-Automation B.V., 5986 PC Beringe (NL)
(72) Inventor: VAN SCHIJNDEL, Hubertus Adrianus Johannes Catharina, 5845 EP Sint Anthonis (NL)
(74) Representative: V.O.

(56) References cited:
- GB-A- 1 209 525
- JP-A- S6 018 431
- NL-B1- 2 017 828
- US-A1- 2002 070 092

## Description

The invention relates to a transport space having a movable product discharging floor. The transport space may be part of e.g. a truck trailer, or another type of transport apparatus.

Transport trailers having movable discharge floors are known to the skilled person. An example is the `Shuttle Floor' trailer of the Canadian company Trout River, which includes a conveyor belt bottom that is driven by steel cables. The floor can handle heavy bulky items, human waste, contaminated soils, agricultural products, pulp waste, source separated organics and e.g. landscaping materials.

The known transport space (NL 2 017 828 B1) requires relatively high power drive means for generating the high forces that are required for moving the floor. Also, the known configuration requires much maintenance leading to significant down-time and additional costs.

In order to alleviate or solve such problems, NL2017828 provides an improved transport space, for example a transport cargo space of a truck trailer, having a movable product discharging floor, wherein the transport space includes an air chamber structure extending below the floor, defining a number of air chambers with a lower side of the floor. Transversally outer edges of the upper part of the movable floor can e.g. be located on smooth side guiding surfaces that extend at angles β upwardly with respect to a horizontal plane defined by a main belt part (for example an angle β in the range of about 10 to 45 degrees). These smooth side guiding surfaces may be provided by respective side plates, extending along the side walls and the two parallel supporting guides.

In this way, movement of the floor can be achieved with relatively low friction, leading to reduction in wear and associated maintenance. Also, in this manner, the floor can be moved using relatively low power drive means, thereby saving both mass and expenses. Particularly, during operation, the air chambers can be filled with air for providing a low friction cushioning of the floor part extending thereon (each air chamber providing e.g. a respective air bearing). Maintaining air pressure in a said air chamber at a desired or predetermined floor supporting pressure level can be achieved during operation by supply of air thereto, utilizing a suitable high volume air supply, particularly for counteracting loss/escape of air.

JPS6018431 discloses an example of a truck that makes it possible to control a floatingly supported condition of an endless conveying member in accordance with movement of a cargo and to improve durability thereof by mounting a mechanism for floatingly supporting the endless conveying member by means of high pressure air.

It has been found that operation of such a transport space requires relatively much energy, in particular for pumping air and pressurizing the aid chamber. The present invention aims to provide solve or alleviate this problem, and aims to provide an improved transport space.

According to an aspect of the invention, there is provided a transport space defined by the features of claim 1.

Advantageously, according to an aspect, there is provided a transport space, for example a transport cargo space of a truck trailer, having a movable product discharging floor, wherein the transport space includes an air chamber structure extending below the floor, defining at least one air chamber with a lower side of the floor, wherein longitudinal lateral sides of the movable floor are supported on two substantially parallel floor supporting sides, the transport space being characterized by pressure members configured for pressing the longitudinal lateral sides of the movable floor onto the opposite floor supporting sides.

In this way, operation of the transport space can be carried out with a significantly reduced energy consumption. In particular, relatively low air flow rates can be used for pressurizing the at least one air chamber. The pressing of the longitudinal lateral sides of the movable floor onto the opposite floor supporting sides can provide a certain sealing of the air chamber(s) so that flow rates of air discharging (or leaking) therefrom can be significantly reduced. Reduction of air flow rate can provide for implementation of a corresponding pressurizing means, e.g. low volume (flow rate) compressor or fan, that requires relatively low power consumption. Alternatively or additionally, pressurizing means can include a pressurized air source (e.g. a pressurized air container).

According to a preferred embodiment, wherein the pressure members include inflatable tubular members, for example silicon hoses.

In this way, good pressurizing along the lateral longitudinal sides of the movable floor can be achieved, in particularly, evenly, in a reliable and durable manner. Also, applied pressure can be controlled well by using inflatable pressurizing means.

According to an embodiment, there can be provided an air source, for example compressor and/or pressurized air container, for pressurizing said inflatable members.

Also, according to an embodiment, there can be provided a control means for controlling the pressure members, in particular for setting and/or maintaining a predefined pressure applied by the pressure members onto the movable floor during operation, the predefined pressure preferably being lower than 1 bar, in particular lower than 0.5 bar, for example in the range of 0.2- 0.4 bar.

It is preferred that the pressure members include friction reducing support sections, for example a glide profile, facing the movable floor, each friction reducing support for example having a low friction surface, e.g. provided by smooth metal, a smooth stainless steel surface, a friction reducing coating and/or polytetrafluoroethylene (PTFE).

In this way, movement of the movable floor can be carried out at relatively low friction between the floor and the pressing pressure members (contacting the floor via the friction reducing support sections).

It is preferred that the pressure members sealingly engage the opposite side of the movable floor (for example via aid friction reduction members), preferably to provide watertight seals there-with. It is preferred that a continuous (uninterrupted) longitudinal sealing is achieved by the sealing engagement of the pressure members. In this way, spill or leakage of water or other liquids, present on the movable floor, can be reduced or avoided, allowing for example an efficient cleansing of the transport space (using water and/or cleaning liquid) and reducing or avoiding liquid waste leaving the floor via its longitudinal lateral sides. Also, the sealing can avoid or reduced chances of (liquid) material, present on the movable floor, passing the pressure members, to avoid contaminating e.g. a downstream air re-circulation system (if any).

The transport structure can include one or more positioning structures, for example support beams, for positioning said pressure members above the movable floor. In a preferred embodiment, the positioning structure can e.g. be configured to define an enclosure, for example longitudinal slit, for receiving and at least partially enclosing a said pressure member. In an embodiment, a said inflatable member (if any) can be located within such an enclosure. Also, in an embodiment, a said friction reducing support sections (if any) can be at least partially located in such an enclosure.

According to a further embodiment, the longitudinal lateral sides of the movable floor can extend substantially in parallel with respect to each other, for example horizontally, i.e. preferably in the same direction as a remaining part of the movable floor. In this way, efficient reliable floor movement can be achieved.

The invention will now be explained in more detail regarding a non-limiting embodiment, that is depicted in the drawings. Therein shows:
Figure 1 a partially opened perspective view of an embodiment of a transport apparatus;
Figure 2 a further opened perspective view of the embodiment shown in Figure 1;
Figure 3 a longitudinal cross-section of the transport space of the embodiment shown in Figure 1;
Figure 4 a cross-section over IV-IV of Figure 3;
Figure 5 a detail Q of Fig. 4;
Figure 6 an opened perspective view of the transport space detail shown in Figure 5; and
Figure 7 a detail similar to Fig. 5 of an alternative embodiment.

Similar or corresponding features are denoted by similar or corresponding reference signs in this application.

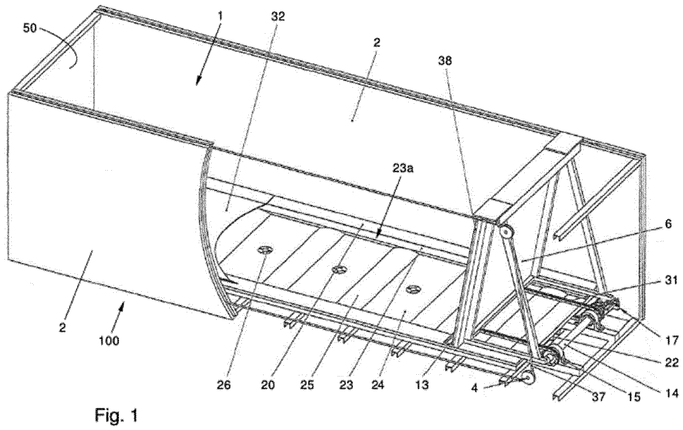

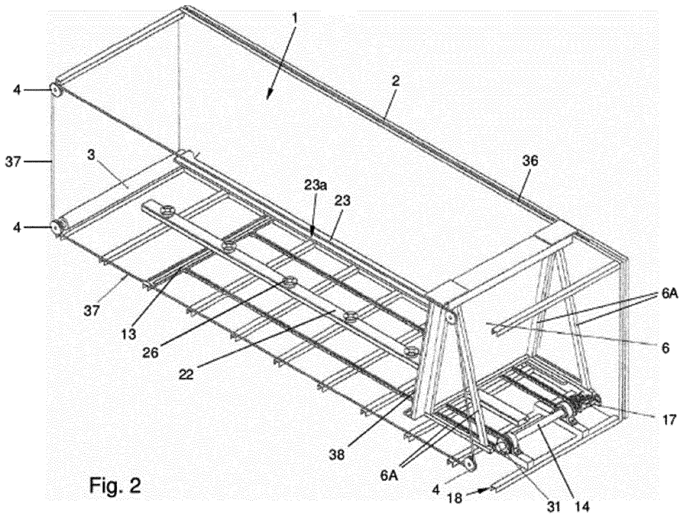

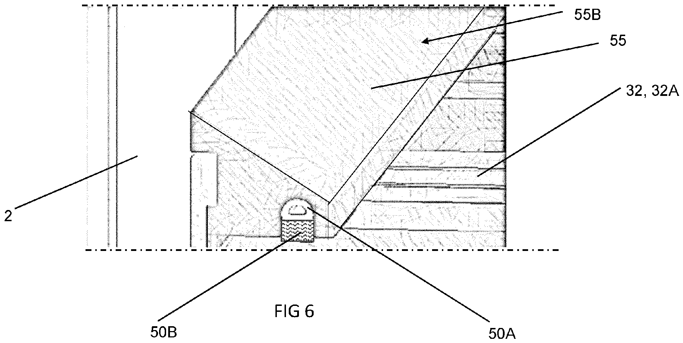

Figures 1-6 show an exemplary embodiment of an apparatus 100, including a transport space 1. For example, the transport space can be a cargo space, to be used for holding various types of loads. The transport apparatus 100 can be or be part of a trailer or truck, or a vessel, vehicle, airplane, or other cargo transporting system.

The transport space 1 can be defined between a top wall (not shown), two side walls 2, a first transversal wall (rear wall) providing an unloading door 50 and opposite transversal wall 51, a floor 32. The configuration can be such that the transport space can be hermetically sealed from an environment, however, that is not essential. For example, the transport space 1 can be is enclosed within a substantially airtight wall structure, including an unloading door 50 (located in a discharging direction L of the product discharging floor in the present example) that can hermetically seal the respective transversal wall section when the door is in a closed position. The door can be moved to an opened product loading or discharge position, allowing access from an environment to the transport space 1 for unloading or loading. Also, in an embodiment, the transport space 1 may be partly or entirely coved by a top or top wall, but that is not required (the top wall is optional).

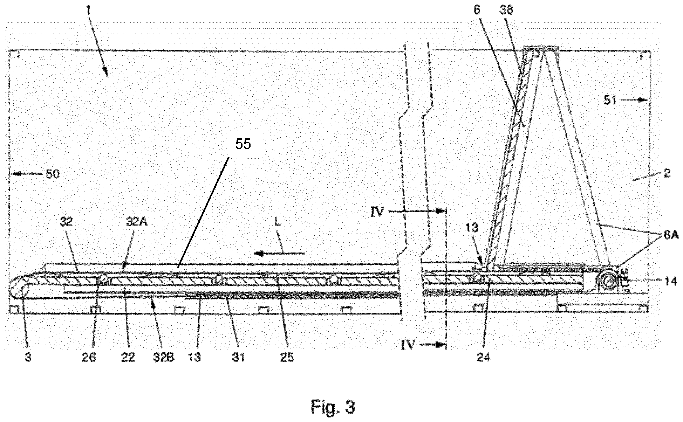

For example, in an embodiment, in order to unload a content (load/cargo, not shown) that is carried on the floor 32, the door 50 can be removed or moved from a closed position to an unloading position, after which the floor 32 can be moved to convey the content out of the transport space. For example, the product discharging floor 32 can be movable from an initial product supporting position to a product discharged position in which the floor 32 extends at least partly at a vertical level below said initial position (see Figures 1, 3).

It is preferred that the floor 32 is a flexible floor that is provided by a flexible conveyor belt, preferably having a watertight configuration. A proximal (upper) and a distal (lower) section of the belt are connected to drive means 17, 31 for moving the belt in longitudinal belt direction L, around a belt turning structure 3 (in this case provided by a cylindrical belt turning roll located near the rear wall 50 of the transport space 1). Preferably, the belt turning structure 3 is configured to rotate around a central axis during belt movement. Thus, the floor 32 can be defined by an upper belt part 32A (for supporting cargo) located upstream of the belt turning structure 3, and a lower belt part (a return section) 32B located downstream of the belt turning structure 3 (see Fig. 3).

The drive means can e.g. include drive members 31, in particular chain members 31, that interconnect a proximal part of the upper belt part 32A and a distal part of the lower belt part 32B (the belt and drive members 31 together forming a closed loop). Movement of the drive members 31 results in respective movement of the floor 32.

A drive 17, for example a motor, a hydraulic motor or different drive unit, can be provided for driving the floor 32 via the drive members 31. In the present example, a drive 17 is configured for rotating a driven axis 14, carrying sprockets 15 that engage two parallel drive members (chains) 31 that are connected to the respective ends (lower end and upper end) of the floor 32. It is preferred that respective connections between drive members and the floor 32 are releasable, to allow floor/belt exchange. For example, floor connection structures 13 can be included, having releasable clamping units or removable connector elements, for connecting end sections of the floor 32 to the drive members 31.

Optionally, the floor can be connected to a movable, upstanding back wall 6, arranged for moving together with the floor 32 (i.e. its upper section 32A) during product discharge. A lower end of the movable back wall 6 is located at or near a respective floor connection structure 13, and an upper end is located near or at a top of the transport space 1. For example, the back wall can extend at a slight angle upwards with respect to a vertical plane (see Fig. 3). The movable back wall 6 may be configured to extend towards or even contact inner surfaces of the opposite side walls 2, for example via optional resilient, durable scraping edges or flaps 38, to assist efficient product unloading. The movable back wall 6 can be supported by a supporting frame 6A (having a triangular shaped, viewed in side view), and is guided by respective guiding means that e.g. include a number of guiding wheels 4 and endless guiding members 36, 37. Each of the side walls 2 can be provided with a number of such guiding wheels 4 guiding a respective endless guiding member 36 (e.g. a belt), wherein upper parts of the endless guiding members 36 are connected to upper sections of the movable back wall 6, for assisting the movement of the movable back wall 6 during floor movement.

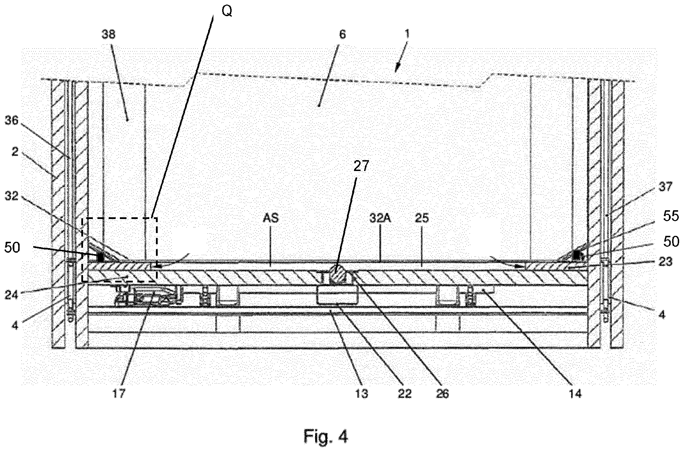

As follows from the drawing, the transport space 1 further preferably includes an air chamber structure 23, 24, 25 extending below the floor 32, defining one or more air chambers AS with a lower side of the movable floor (see Figure 4). In particular, the lower side of the flexible floor 32 can contact opposite upper sides/edges of the air chamber structure substantially airtight.

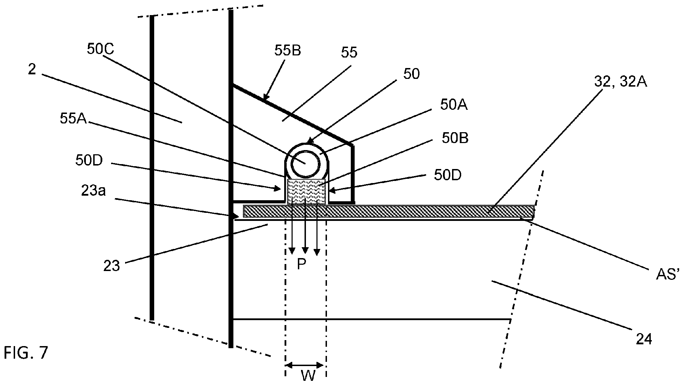

The air chamber structure can be configured in various ways as will be appreciated by the skilled person. In particular, the air chamber structure can include air supply means, for providing an air cushion below the movable floor 32. The air cushion can e.g. be or include one or more air layers extending between the moveable floor 32 and a fixed floor 24 (se also Figure 7, showing application or a relatively thin air layer or air space between the floors 24, 32).

The air chamber structure can e.g. have a fixed floor 24, extending spaced-apart below a horizontal level of the movable floor, the fixed floor optionally having one or more upwardly protruding floor supporting ridges 25. According to an example, the supporting ridges 25 can extend transversally with respect to the discharge direction L of the movable floor, and are located spaced-apart from each other viewed in the same direction L. Good results can be achieved e.g. by convex, upwardly protruding ridges 25, having curved or rounded upper sides, allowing for low friction support (e.g. via a line-contact or narrow strip-contact) of the movable floor 32.

Optionally, the one or more air chambers AS can be located between respective pairs of transversal floor supporting ridges (see Figures 1, 3).

Also, contact-lines/strips between upper sides of the optional supporting ridges 25 and the lower side of the upper section 32A of the movable floor 32 may extend transversally with respect to a longitudinal floor direction (i.e. unloading direction L), leading to good results, but that is not required.

To the skilled person it will be clear that the configuration of such one or more air chambers AS can also be different, the chambers AS for example being provided in a different pattern than the present longitudinal array of air chambers AS.

Besides, only a single air chamber AS can be present or defined between the fixed floor 24 and the movable floor 32.

Alternatively or additionally, the fixed floor 24 can include a lowered upper surface section, covered by the movable floor 32, to define an air chamber there-between (to be pressurized with air during operation).

Also, as is shown in Figure 7, for example, the movable floor 32 (at least an upper section 32A thereof) can be directly supported on an upper surface of the fixed floor 24, wherein an air chamber AS' is defined between these floors 24, 32, during operation. A layer of air can be held between the floors 24, 32 due to injecting air there-between. In this case, no upstanding supporting ridges 25 are required. It has been found that good results can be achieved with this alternative embodiment, requiring relatively low amount of air for air-cushioning the movable floor 32 above the fixed floor 24. In particular, in this case, it is preferred that the fixed floor has a smooth (flat) surface for supporting the movable floor 32 (via an intermediate air cushion). Also, for example, the fixed floor 24 can have a low friction surface facing the movable floor 32, e.g. a surface provided by smooth metal or smooth stainless steel surfaces and/or having a friction reducing coating.

In an embodiment, the air chamber structure 23, 24, 25 includes two substantially parallel floor supporting sides 23a (e.g. provided by respective support members 23, or provided by the fixed floor 24 as in Figure 7), supporting longitudinal lateral sides (i.e. parallel edges or edge sections) of the movable floor 32 when the floor 32 is in an initial product supporting position.

In an embodiment, as follows from Fig. 4, the two parallel floor supporting sides 23a can be provided e.g. by upper surfaces of floor supporting guides 23, extending in parallel along the two sides walls 2 and protruding upwardly from the fixed floor 24 (a height of the floor supporting guides 23 being e.g. the same as a height of the intermediate transversal ridges 25). The floor supporting guides 23 can be integral parts of the fixed floor 24, e.g. be made in one-piece there-with, but that is not required. In an alternative embodiment, upper surfaces of the parallel floor supporting sides 23 are located at the same vertical level as an upper surface of the fixed floor 24 (see the example of Figure 7).

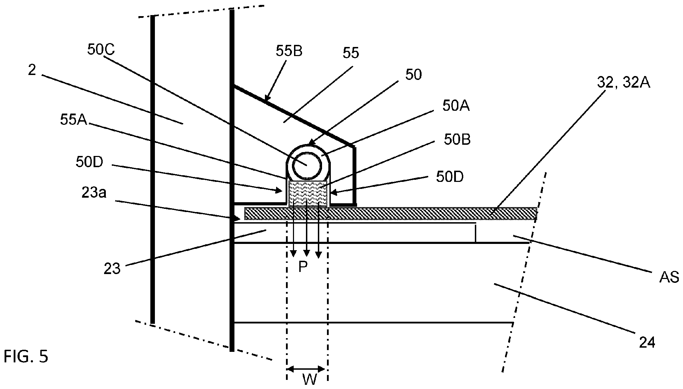

Preferably, the parallel floor supporting sides 23a are low friction surfaces, e.g. provided by smooth metal or smooth stainless steel surfaces and/or having a friction reducing coating. Further details of preferred configurations of pressing the movable floor 32 onto the two parallel supporting sides 23a is described below, and is depicted in Figures 5, 6, 7.

During operation, said air chambers AS can be enclosed between the upper section 32A of the movable floor 32 (in case the floor is in an appropriate position, entirely covering that air chamber AS) on one hand, and the various elements/structures (respective part of the fixed floor 24, optional ridges 25 and guiding elements 23) on the other hand. The configuration is particularly such that the enclosure is substantially airtight.

Further, the transport space S can include or be connectable to an air supply 22, 26 for supplying pressurized air to each of said air chambers AS. The air supply includes for example an air duct 22, extending in below the fixed floor 24 (for example centrally). The air duct 22 can e.g. be brought in fluid connection to the air chambers AS via an respective array of air pressure controlling means. In particular, the air pressure controlling means can be operably by/via a floor section, such that the air pressure controlling means can be brought automatically to an air-supplying (open) state via a force or operating pressure that can be exerted on the air pressure controlling means by a floor part extending there-above. Also, each of the air pressure controlling means can be brought automatically to closed state in case of a certain drop in floor operating pressure or release of operating force, particularly at least in case the floor has moved away from the respective air pressure controlling means.

In an advantageous embodiment, each of the air pressure controlling means includes a durable and reliable, spring loaded check valve 26, known as such from prior art document NL2017828. As follows from NL'828, such a valve can includes a valve housing, having an upper wall that can be integrated or located in the fixed floor 24 of the transport space (for example such that an upper side of the valve housing coincides with an upper side of the fixed floor 24). A lower wall of the valve housing can include an air inlet port for receiving air from the air supply duct 22. The valve can include a return spring, arranged to force a ball valve member 27 upwardly for closing a respective air exit port by spring force. Opening of the valve 26 can be achieved by a downward pressure/force, forcing the valve member 27 downwardly against the spring force, thereby releasing the air exit port to allow air flow via the valve into the respective air chamber AS.

In a preferred embodiment, the valve member 27 is a durable ceramic ball 27. This results in low friction, long-life and reliable valve operation, and avoids or reduced wear to the movable floor 32.

Further, one or more air sources (not shown) may be provided, for example (but not necessarily) being part of or coupled to a structure of the transport space 1. As will be appreciated, an air source can be e.g. a pump, or pressurized air container and/or a different air sour type. The air source can be connected to the air supply duct 22 for pressurizing the duct during operation. Suitable operating pressures can be above 1 bar, particularly above ambient air pressure, for example a pressure that is at least 0.5 bar above ambient pressure, or a different pressure. It is preferred that the air duct 22 and respective valve housings can be brought to an air pressure that allows cushioning support of the movable floor (e.g. carrying a load) via the respective air chambers AS (i.e. the build-up air pressure lifting or holding the upper floor section 32A from the fixed floor 24).

Referring to Figures 4-7 it is preferred that the transport space includes pressure members 50 configured for pressing the longitudinal lateral sides of the movable floor onto the opposite floor supporting sides 23a. Such pressure members 50 can be configured in various ways as will be appreciated by the skilled person.

It is preferred that the pressure members 50 are actively controllable, to provide a controlled, predefined pressure onto the floor (i.e. an opposite lateral floor side, extending below the pressure member 50). It is preferred that a pressure, exerted by each pressure member 50 onto the movable floor 32, is independent of a load (if any) carried by the movable floor 32. It is preferred that the pressure members 50 extend in parallel with each other, e.g. in parallel with an unloading direction L of the movable floor. Also, it is preferred that a relatively low pressure is exerted onto the movable floor 32 by each pressure member 50, for example a pressure lower than 0.5 bar, and preferably a pressure of at most 0.2 bar. According to a preferred embodiment, the two longitudinal lateral sides of the upper section 32A of the movable floor 32 are engaged between fixed floor supporting members 23 of the transport space and opposite pressure members 50, preferably to provide a substantially water-tight sealing along a top surface of the respective sides of movable floor 32. It is also preferred that each of the pressure members 50 extends continuously, uninterrupted, over the movable floor 32 when the floor is in an product supporting position, and preferably provides an evenly distributed pressure onto the floor. It is preferred that the pressure (indicated by arrow P in Figure 5) achieved by each pressure member is directed normally (e.g. substantially vertically) with respect to the opposite surface of the movable floor 32.

For example, the pressure members 50 can include inflatable tubular members 50A, for example tubular members made of flexible material for example, silicon (such as silicon hoses). Each inflatable member 50A can define or surround an air space 50C which can be pressurized for inflating the inflatable member 50A. Each inflatable tubular members 50A can be pressurized/inflated to a certain degree (pressure) to achieve a desired or set, predetermined, pressure onto the opposite surface of the movable floor.

According to an embodiment, the transport space can include or be provided with an air source, for example compressor and/or pressurized air container, for pressurizing said inflatable members (50A). The air source can be at least partly integrated with an above-mentioned air source for supplying air to provide an air cushion under the movable floor (e.g. supplying air to a an air supply duct 22 of an air chamber structure) but that is not required. For example the transport space can include or be provided with a dedicated air source (not shown) for pressurizing inflatable pressure members 50.

Preferably, each of the pressure members 50 includes one or more friction reducing support sections 50B, for example a glide profile, facing the movable floor 32. The friction reducing support 50B can for example have a low friction surface, e.g. provided by smooth metal, a smooth stainless steel surface, a friction reducing coating and/or polytetrafluoroethylene (PTFE), the low friction surface in particular facing an opposite floor support member 23a (and intermediate movable floor 32).

Preferably, there is provided a positioning structure 55, for example a rigid support beam, for positioning a said pressure member 50 above the movable floor. Each positioning structure 55 can e.g. be fixed to or integrated with a side wall 2 of the transport space. Each positioning structure 55 can be configured to substantially shield or cover the pressure member 50 from a content (e.g. load) of the transport space. For example, the positioning structure 55 can include a top surface 55B extending or reaching laterally into the transport space, above a respective pressure member 50, e.g. substantially covering the pressure member 50 from a content of the transport space.

In a preferred embodiment, each positioning structure 55 can e.g. be configured to define an enclosure, for example longitudinal slit 55A, for receiving and at least partially enclosing (and covering/shielding) a said pressure member 50, 50A, 50B.

In an embodiment, a said inflatable member 50A (if any) can be located or embedded within such an enclosure or slit/aperture 55A. Also, in an embodiment, a said friction reducing support sections 50B (if any) can be at least partially located in such an enclosure. As an example, an inflatable member 50A can extend along a bottom an elongated aperture of the positioning structure, wherein the said friction reducing support section 50B is provided in the elongated aperture 55A on top of the respective inflatable member 50A (that is: between the inflatable member 50A and a top side of the movable floor 32). The pressure member 50, for example a friction reducing support section 50B thereof, can e.g. protrude downwardly, out of the aperture 55A, for engaging the top section 32A of the movable floor 32.

Also, according to an embodiment, the positioning structure 55 can act as a guide for guiding the respective pressure member 50 towards (and away from) a movable floor section that is supported on an opposite supporting fixed member 23a. In an example, the positioning structure 55 can act as a guide for guiding a support section 50B of the respective pressure member 50 towards (and away from) the movable floor section that is supported on an opposite supporting fixed guiding member 23a (said support section 50B being movable held in or by the positioning structure 50). For example, a longitudinal aperture 55A of the positioning can be defined between two opposite inner side walls 50D, slidingly holding a pressure support section 50B there-between.

A pressure support section 50B of a pressure member can be configured and shaped in various ways. For example, each pressure support section 50B can have a flat (e.g. horizontal) surface facing (and engaging) a top surface of the movable floor 32, for example having a width W in the range of 1 - 10 cm, preferably 1- 5 cm, measured transversally (see Fig. 5).

According to an embodiment, each pressure support section 50B of a pressure member 50 can be made of plastic. The support section 50B can e.g. be made of a rigid material (e.g. rigid plastic) that does not deform during operation (i.e. when applying pressure to the movable floor).

According to an embodiment, each pressure support section 50B can have a substantially rectangular or square cross section. For example, each pressure support section 50B of a pressure member 50 can include two longitudinal (substantially vertical) sides, at least partly facing (substantially vertical) inner surfaces (or walls 50D) of the positioning structure 55, to be slidingly held there-between.

According to an embodiment, the longitudinal lateral sides of the movable floor 32 extend substantially in parallel with respect to each other. It follows that these sides preferably do not extend at an angle upwardly with respect to a horizontal plane defined by a main belt part.

According to a preferred embodiment, the pressure members 50 both sealingly engage the opposite side of the movable floor to provide watertight seals there-with. For example, such sealing engagement can be achieved between a downwardly facing surface of a said support section 50B and the floor 32.

According to an embodiment, control means (not shown) are provided for controlling the pressure members 50, in particular for setting and/or maintaining a predefined pressure applied by the pressure members 5 onto the movable floor 32 during operation, the predefined pressure P preferably being lower than 2 bar, for example lower than 1 bar, in particular lower than 0.5 bar, for example about 0.2-0.4 bar (the predefined pressure P e.g. being at least 0.1 bar.

It will be appreciated that such control means can be configured in various ways, depending on the type of pressure member used. In case of an inflatable pressure member, the control means can e.g. include one or more air pressure sensors for detecting pressure member inflation pressure, and for regulating or adjusting such pressure to achieve a predetermined pressure. The control means can e.g. be configured to activate or control air supply means (e.g. an afore-mentioned air source) for supplying the air to such inflatable pressure members. An air source can include e.g. valve means or a pressure regulator (controllable by the control means) for regulating air flow.

Also, the control means can be configured to apply pressure via the pressure members 50 depending on a state of the loading space. For example, the pressure can be automatically applied (via control of the control means) during unloading, i.e. respective discharge movement of the movable floor. Also, the pressure can be automatically applied (via control of the control means) during certain cleaning or decontamination process of the transport space

During operation, the transport space 1 can be used to carry a load on the upper section 32A of the movable floor 32. During product discharge, the drive 17 can be activated for moving the upper floor section 32A (and respective movable back wall 6) in a product discharge direction L. In order to achieve a smooth floor movement, air is supplied to the check valves 26 via the air duct 22, at an air pressure sufficient for opening the valves 26 to fill respective air chambers AS, AS' with air. As a result, a lifting force is effected, by the air pressure in the air chambers AS, AS' onto the upper part of the movable floor 32A.

It is preferred that, during operation, the pressure members 50 apply a predetermined pressure (e.g. in the range of about 0.1-0.5) onto the movable/moving floor 32, i.e. engage the longitudinal lateral sides of the floor, so that air pressure can be maintained within the one or more air chambers AS at a relatively low air flow rate towards the chamber(s) AS, AS'. In particular, the floor 32 can be pressed against said two substantially parallel floor supporting sides 23a of the transport space, such that air discharge from the air chamber(s) AS, AS' is reduced or substantially prevented. In an embodiment, the pressure is applied by inflating/pressurizing inflatable sections 50A of the pressure members 50. It is preferred that substantially any air that is discharged from the one or more air chambers AS, AS' is collected and circulated/pumped back, to be reintroduced in the air chamber(s) again, to avoid such air escaping to an environment of the transport space.

Preferably, during movement of the floor 32 (product discharge), the air supply to an air chamber can be automatically halted in case the floor 32 has moved away from that air chamber AS, AS'. Particularly, in the present example, the upper section 32A of the floor acts as an operating member, operating the valve of an air chamber AS, AS' (when closed by the floor 32) by pressing the valve member 26 downwardly in case of relatively low pressure in the air chamber AS (and thereby allowing pressurizing or re-pressurizing of the air chamber AS, AS'). When the floor 32 moves further and separates from the valve, however, the valve remains in a closed condition since it is no longer operated by the floor.

Alternatively, or in addition, the transport space can be provided with floor position detection means, detecting a position of the floor, and air supply means that are controllable by such detection means. The skilled person will appreciate that such detecting means and controllable air supply means can be achieved in various ways, e.g. using contact sensors, optical sensors, encoders, pneumatically, hydraulically or electrically operable air valves, et cetera.

It is to be understood that in the present application, the term "comprising" does not exclude other elements or steps. Also, each of the terms "a" and "an" does not exclude a plurality. Any reference sign(1) in the claims shall not be construed as limiting the scope of the claims.

## Claims

1. A transport space (1), for example a transport cargo space of a truck trailer, having a movable product discharging floor (32), wherein the transport space (1) includes an air chamber structure (23, 24, 25, 26) extending below the floor (32), defining at least one air chamber (AS; AS') with a lower side of the floor, wherein longitudinal lateral sides of the movable floor (32) are supported on two substantially parallel floor supporting sides (23a), **characterized by** pressure members (50) configured for pressing the longitudinal lateral sides of the movable floor onto the opposite floor supporting sides (23a).

2. A transport space according to claim 1, wherein the pressure members (50) include inflatable tubular members (50A), for example silicon hoses.

3. A transport space according to claim 2, including an air source, for example compressor and/or pressurized air container, for pressurizing said inflatable members (50A).

4. A transport space according to any of the preceding claims, wherein the pressure members (50) include friction reducing support sections (50B), for example a glide profile, facing the movable floor (32), each friction reducing support for example having a low friction surface, e.g. provided by smooth metal, a smooth stainless steel surface, a friction reducing coating and/or polytetrafluoroethylene (PTFE).

5. A transport space according to any of the preceding claims, including a positioning structure (55), for example a support beam, for positioning a said pressure member (50) above the movable floor.

6. A transport space according to any of the preceding claims, wherein the longitudinal lateral sides of the movable floor (32) extend substantially in parallel with respect to each other.

7. A transport space according to any of the preceding claims, including a control means for controlling the pressure members (5), in particular for setting and/or maintaining a predefined pressure applied by the pressure members (5) onto the movable floor (32) during operation, the predefined pressure preferably being lower than 1 bar, in particular lower than 0.5 bar.

8. A transport space according to any of the preceding claims, wherein the pressure members (50) sealingly engage the opposite side of the movable floor to provide watertight seals there-with.

9. A transport space (1) according to any of the preceding claims, wherein a lower side of the movable floor (32) contacts an opposite upper side of the air chamber structure substantially airtight.

10. A transport space (1) according to any of the preceding claims, wherein the transport space (1) includes or is connectable to an air supply (22, 26) for supplying pressurized air to said air chamber.

11. A transport space (1) according to any of the preceding claims, wherein the air chamber structure includes at least one air pressure controlling means, for example a spring loaded check valve (26), for controlling air pressure in that chamber.

12. A transport space (1) according to claim 11, wherein said air pressure controlling means is located in a bottom of the respective chamber, and preferably includes a ball check valve, more preferably having a ceramic ball (27).

13. A transport space (1) according to any of the preceding claims, wherein said product discharging floor (32) is movable from an initial product supporting position to a product discharged position in which the floor (32) extends at a vertical level below said initial position.

14. A transport space (1) according to any of the preceding claims, including a movable back wall (6), arranged for moving together with the floor (32) during product discharge.

15. A transport space (1) according to any of the preceding claims, wherein the transport space (1) is enclosed within a substantially airtight wall structure (2), closed-off by a movable door (50) located in a discharging direction of the product discharging floor.

16. A transport space according to any of the preceding claims, wherein upper surfaces of the parallel floor supporting sides (23a) are located at the same vertical level as an upper surface of the fixed floor (24).

17. Transport apparatus (100), for example a vehicle or vessel, including or provided with at least one transport space (1) according to any of the preceding claims.

## Patentansprüche

1. Transportraum (1), zum Beispiel ein Transportladeraum eines LKW-Anhängers, mit einem beweglichen Produktentladeboden (32), wobei der Transportraum (1) eine Luftkammerstruktur (23, 24, 25, 26) enthält, die sich unterhalb des Bodens (32) erstreckt und mindestens eine Luftkammer (AS; AS') mit einer Unterseite des Bodens definiert, wobei Längsseiten des beweglichen Bodens (32) auf zwei im Wesentlichen parallelen Bodenstützseiten (23a) abgestützt sind, **gekennzeichnet durch** Druckelemente (50), die so konfiguriert sind, dass sie die Längsseiten des beweglichen Bodens auf die gegenüberliegenden Bodenstützseiten (23a) drücken.

2. Transportraum nach Anspruch 1, wobei die Druckelemente (50) aufblasbare rohrförmige Elemente (50A), zum Beispiel Silikonschläuche, enthalten.

3. Transportraum nach Anspruch 2, mit einer Luftquelle, zum Beispiel einem Kompressor und/oder einem Druckluftbehälter, um die aufblasbaren Elemente (50A) unter Druck zu setzen.

4. Transportraum nach einem der vorstehenden Ansprüche, wobei die Druckelemente (50) dem beweglichen Boden (32) zugewandte reibungsmindernde Stützabschnitte (50B), zum Beispiel ein Gleitprofil, enthalten, wobei jede reibungsmindernde Stütze zum Beispiel eine reibungsarme Oberfläche aufweist, z. B. durch glattes Metall, eine glatte Edelstahloberfläche, eine reibungsmindernde Beschichtung und/oder Polytetrafluorethylen (PTFE).

5. Transportraum nach einem der vorstehenden Ansprüche, mit einer Positionierungsstruktur (55), zum Beispiel einem Stützbalken, zur Positionierung des Druckelements (50) oberhalb des beweglichen Bodens.

6. Transportraum nach einem der vorstehenden Ansprüche, wobei die Längsseiten des beweglichen Bodens (32) im Wesentlichen parallel zueinander verlaufen.

7. Transportraum nach einem der vorstehenden Ansprüche, mit einem Steuermittel zur Steuerung der Druckelemente (5), insbesondere zur Einstellung und/oder Aufrechterhaltung eines vordefinierten Drucks, der von den Druckelementen (5) während des Betriebs auf den beweglichen Boden (32) ausgeübt wird, wobei der vordefinierte Druck vorzugsweise niedriger als 1 bar, insbesondere niedriger als 0,5 bar ist.

8. Transportraum nach einem der vorstehenden Ansprüche, wobei die Druckelemente (50) abdichtend an der gegenüberliegenden Seite des beweglichen Bodens angreifen, um eine wasserdichte Abdichtung mit diesem zu schaffen.

9. Transportraum (1) nach einem der vorstehenden Ansprüche, wobei eine Unterseite des beweglichen Bodens (32) eine gegenüberliegende Oberseite der Luftkammerstruktur im Wesentlichen luftdicht berührt.

10. Transportraum (1) nach einem der vorstehenden Ansprüche, wobei der Transportraum (1) eine Luftzuführung (22, 26) zur Versorgung der Luftkammer mit Druckluft enthält oder an diese anschließbar ist.

11. Transportraum (1) nach einem der vorstehenden Ansprüche, wobei die Luftkammerstruktur mindestens eine Luftdruck-Steuereinrichtung, zum Beispiel ein federbelastetes Rückschlagventil (26), zur Steuerung des Luftdrucks in dieser Kammer enthält.

12. Transportraum (1) nach Anspruch 11, wobei sich die Luftdruck-Steuereinrichtung in einem Boden der jeweiligen Kammer befindet und vorzugsweise ein Kugelrückschlagventil enthält, das vorzugsweise eine Keramikkugel (27) aufweist.

13. Transportraum (1) nach einem der vorstehenden Ansprüche, wobei der Produktentladeboden (32) von einer anfänglichen Produktstützposition in eine Produktentladeposition bewegbar ist, in der sich der Boden (32) auf einem vertikalen Niveau unterhalb der Anfangsposition erstreckt.

14. Transportraum (1) nach einem der vorstehenden Ansprüche, mit einer beweglichen Rückwand (6), die so angeordnet ist, dass sie sich während der Produktentladung zusammen mit dem Boden (32) bewegt.

15. Transportraum (1) nach einem der vorstehenden Ansprüche, wobei der Transportraum (1) von einer im wesentlichen luftdichten Wandstruktur (2) umschlossen ist, die durch eine bewegliche Tür (50) verschlossen ist, die sich in einer Entladerichtung des Produktentladebodens befindet.

16. Transportraum nach einem der vorstehenden Ansprüche, wobei sich die Oberseiten der parallelen Bodenstützseiten (23a) auf demselben vertikalen Niveau befinden wie eine Oberseite des festen Bodens (24).

17. Transporteinrichtung (100), zum Beispiel ein Fahrzeug oder Schiff, mit mindestens einem Transportraum (1) nach einem der vorstehenden Ansprüche.

## Revendications

1. Un espace de transport (1), par exemple un espace de transport de marchandises d'une remorque de camion, comportant un plancher mobile de déchargement de produits (32), lequel espace de transport (1) comprend une structure de chambre d'air (23, 24, 25, 26) s'étendant au-dessous du plancher (32), définissant, au moins avec un côté inférieur du plancher, une chambre d'air (AS; AS'), dans lequel des côtés latéraux longitudinaux du plancher mobile (32) sont supportés sur deux côtés de support de plancher sensiblement parallèles (23a), **caractérisé par** des organes de pression (50) configurés pour presser les côtés latéraux longitudinaux du fond mobile sur les côtés de support de planchers opposés (23a).

2. Un espace de transport selon la revendication 1, dans lequel les organes de pression (50) comprennent des organes tubulaires gonflables (50A), par exemple des tuyaux en silicone.

3. Un espace de transport selon la revendication 2, comprenant une source d'air, par exemple un compresseur et/ou un réservoir d'air sous pression, pour mettre sous pression lesdits organes gonflables (50A).

4. Un espace de transport selon l'une quelconque des revendications précédentes, dans lequel les organes de pression (50) comprennent des sections de support de réduction du frottement (50B), par exemple un profil de glisse, faisant face au fond mobile (32), chaque support de réduction du frottement comportant par exemple une surface à faible taux de friction, par exemple assuré par du métal lisse, une surface lisse en acier inoxydable, un revêtement de réduction de la friction et/ou du polytétrafluoroéthylène (PTFE).

5. Un espace de transport selon l'une quelconque des revendications précédentes, comprenant une structure de positionnement (55), par exemple une poutre de support, pour positionner un dit organe de pression (50) au-dessus du fond mobile.

6. Un espace de transport selon l'une quelconque des revendications précédentes, dans lequel les côtés latéraux longitudinaux du fond mobile (32) s'étendent sensiblement parallèlement les uns par rapport aux autres.

7. Un espace de transport selon l'une quelconque des revendications précédentes, comprenant un moyen de commande des organes de pression (5), notamment pour régler et/ou maintenir une pression prédéfinie appliquée durant le fonctionnement, par les organes de pression (5), sur le fond mobile (32), la pression prédéfinie étant de préférence inférieure à 1 bar, notamment inférieure à 0,5 bar.

8. Un espace de transport selon l'une quelconque des revendications précédentes, dans lequel les organes de pression (50) s'engagent de manière étanche sur le côté opposé du fond mobile pour fournir des joints étanches avec celui-ci.

9. Un espace de transport (1) selon l'une quelconque des revendications précédentes, dans lequel un côté inférieur du fond mobile (32) entre en contact avec un côté supérieur opposé de la structure de chambre d'air de manière sensiblement étanche à l'air.

10. Un espace de transport (1) selon l'une quelconque des revendications précédentes, dans lequel l'espace de transport (1) comprend ou peut être connecté à une alimentation en air (22, 26) pour fournir de l'air sous pression à ladite chambre d'air.

11. Un espace de transport (1) selon l'une quelconque des revendications précédentes, dans lequel la structure de chambre d'air comprend au moins un moyen de contrôle de la pression d'air, par exemple un clapet anti-retour à ressort (26), pour contrôler la pression de l'air dans cette chambre.

12. Un espace de transport (1) selon la revendication 11, dans lequel lesdits moyens de contrôle de la pression d'air sont situés dans un fond de la chambre respective, et comprennent de préférence un clapet anti-retour à bille, de préférence comportant une bille en céramique (27).

13. Un espace de transport (1) selon l'une quelconque des revendications précédentes, dans lequel ledit plancher de déchargement de produits (32) est mobile depuis une position initiale de support de produits jusqu'à une position de déchargement de produits dans laquelle le plancher (32) s'étend à un niveau vertical au-dessous de ladite position initiale.

14. Un espace de transport (1) selon l'une quelconque des revendications précédentes, comprenant une paroi arrière mobile (6), agencée pour se déplacer avec le plancher (32) lors de l'évacuation des produits.

15. Un espace de transport (1) selon l'une quelconque des revendications précédentes, dans lequel l'espace de transport (1) est enclos dans une structure murale sensiblement étanche à l'air (2), fermée par une porte mobile (50) située dans une direction de déchargement du plancher de déchargement de produits.

16. Un espace de transport selon l'une quelconque des revendications précédentes, dans lequel les surfaces supérieures des côtés de support de plancher parallèles (23a) sont situées au même niveau vertical qu'une surface supérieure du plancher fixe (24).

17. Appareil de transport (100), par exemple un véhicule ou un navire, comprenant ou pourvu d'au moins un espace de transport (1) selon l'une quelconque des revendications précédentes.
